Europäisches Patentamt

European Patent Office

Office européen des brevets

(19)

(11)     EP 0 792 840 B1

(12)                    **EUROPÄISCHE PATENTSCHRIFT**

(45) Veröffentlichungstag und Bekanntmachung des
     Hinweises auf die Patenterteilung:
     **12.05.1999 Patentblatt 1999/19**

(51) Int. Cl.⁶: **C01G 49/06**, C01G 49/08,
     C09C 1/24

(21) Anmeldenummer: **97102543.2**

(22) Anmeldetag: **17.02.1997**

(54) **Verwendung von synthetischen, bainitreichen Eisenrohstoffen zur Herstellung von Eisenoxidpigmenten**

Use of synthetic, bainite-rich iron raw materials for the preparation of iron oxide pigments

Utilisation de matières premières ferreuses synthétiques riches en bainite pour la préparation de pigments d'oxyde de fer

(84) Benannte Vertragsstaaten:
     **BE DE ES GB IT NL SE**

(30) Priorität: **28.02.1996 DE 19607454**

(43) Veröffentlichungstag der Anmeldung:
     **03.09.1997 Patentblatt 1997/36**

(73) Patentinhaber: **BAYER AG**
     **51368 Leverkusen (DE)**

(72) Erfinder:
     • **Burow, Wilfried, Dr.**
       **47809 Krefeld (DE)**
     • **Oehlert, Wolfgang, Dr.**
       **47829 Krefeld (DE)**
     • **Iskluth, Bernd, Dr.**
       **90402 Nürnberg (DE)**

(56) Entgegenhaltungen:
     DE-C- 143 517          DE-C- 463 773
     GB-A- 1 226 876        US-A- 4 432 803

**Beschreibung**

Die Erfindung betrifft die Verwendung von synthetisch erzeugten, bainitreichen Eisenrohstoffen zur Herstellung von Eisenoxidpigmenten.

Eisenoxidfarbpigmente, die als ökologisch unbedenkliche Färbemittel in Keramiken, Baustoffen, Kunstoffen, Lacken und Papier zum Einsatz kommen, können grundsätzlich in schwarzen, gelben, roten und braunen Farbtönen erhalten werden.

Eisenoxidpigmente erhält man, wie in Ulllmann's Encyclopedia of Industrial Chemistry, VCH, Weinheim 1992, Vol. A20, S. 298ff beschrieben, durch Festphasenreaktionen (Rot, Braun und Schwarz), Fällungs- und Hydrolysereaktionen von Eisensalzen (Gelb, Rot, Orange und Schwarz) sowie durch Oxidation von Eisen mit aromatischen Nitroverbindungen in Gegenwart hydrolysierbarer, mehrwertiger Salze (Lauxprozeß: DE 463 773, DE 515 758).

Die Festphasenreaktionen werden überwiegend zur Produktion von roten Eisenoxiden aus schwarzen Vorläuferprodukten (Kalzination) oder aus $FeSO_4$ (Copperas-Prozeß) angewendet. Die Produktion der schwarzen Vorläuferprodukte erfolgt durch Fällung aus Eisensalzlösungen oder durch den Lauxprozeß. Die Erzeugung von Eisenoxidrotpigmenten durch Abrösten von Eisensulfat ist ein technisch aufwendiger Prozeß, der mit mehreren, nacheinandergeschalteten Waschschritten verbunden ist, bei welchen schwermetallhaltige Abwässer entstehen.

Die Erzeugung von gelben, orangen, roten und schwarzen Eisenoxidpigmenten über den Fällungsprozeß (z.B. US 2 388 659 für Eisenoxidgelbpigmente) aus Eisensalzlösungen und alkalischen Verbindungen in Gegenwart von Luft ist mit dem Nachteil verbunden, daß stöchiometrische Mengen von Neutralsalzen erzeugt werden, die mit dem Abwasser abgeführt oder zeit- und kostenintensiv aufgearbeitet werden müssen.

Der Penniman-Prozeß (US 1 327 061 und US 1 368 748) reduziert die Menge an Neutralsalzen, die während des Fällungsvorganges entstehen, durch Verwendung von metallischem Eisen als Rohstoff, welches während des Prozesses durch freiwerdenden Säure aufgelöst wird.

Der Lauxprozeß stellt die Umsetzung der altbekannten Béchamp-Reaktion in den technischen Maßstab dar. Durch Reduktion von aromatischen Nitroverbindungen mit metallischen Eisenrohstoffen gelingt es bei geeigneter Reaktionsführung, das neben der aromatischen Aminoverbindung zwangsweise entstehende Eisenoxid in Pigmentqualität zu erhalten. Der Lauxprozeß ist ein kostengünstiges und ökologisch unbedenkliches Verfahren zur Erzeugung von Eisenoxidpigmenten, da aufgrund der Verwendung von metallischen Eisenrohstoffen keine Basen zur Fällung des Eisenoxids benötigt werden und daher keine Neutralsalze als zu entsorgende Nebenprodukte entstehen.

Mit dem Penniman- und dem Lauxprozeß stehen somit zur direkten Erzeugung von Eisenoxidpigmenten zwei kostengünstige, ökologisch unbedenkliche Verfahren zur Verfügung, die als Rohstoff metallisches Eisen verwenden.

Die Rohstoffe für diese Prozesse sind Nebenprodukte anderer Industriezweige; als Eisensalzlösungen (z.B.: $FeCl_2$, $FeSO_4$) werden Beizlaugen aus der Stahlindustrie oder Eisensulfat aus der $TiO_2$-Produktion eingesetzt. Die metallischen Eisenrohstoffe sind in allen Fällen sogenannte Sekundärrohstoffe aus der metallverarbeitenden Industrie (Schrotte). Je nach Anforderung des gewählten Prozesses können diese Schrotte in Form von Lochbutzen, Stiften- oder Nagelspitzen, Blechen, Paketen oder Spänen vorliegen.

Die Verwendung dieser Schrotte (Sekundärrohstoffe) zur Erzeugung von Eisenoxidpigmenten ist mit erheblichen Nachteilen verbunden, da es sich nicht um definierten Rohstoffe handelt. Die Schrotte können sowohl in ihrer chemischen Zusammensetzung als auch in ihrer Reaktivität in den Prozessen erhebliche Schwankungen aufweisen.

Es lag daher nahe, die mit den Sekundärrohstoffen verbundenen Qualitätsmängel und -schwankungen durch den Einsatz von synthetisch erzeugten Eisenrohstoffen zu eliminieren. Synthetisch erzeugte Eisenrohstoffe sind z.B.:

Roheisen
Gußeisen
Spiegeleisen
Stähle
Eisen-/Stahlpulver.

Dabei ist es aus wirtschaftlichen Gründen sinnvoll, nur solche Eisenrohstoffe einzusetzen, die in großen Mengen für andere Industriebereiche erzeugt werden und daher in ausreichender Menge zur Verfügung stehen.

Die synthetischen Eisenrohstoffe sollten folgendes Eigenschaftsprofil aufweisen:

1. günstiges Förderverhalten
2. leichte Dosierbarkeit
3. vollständiges Auflösen während des Prozesses
4. geringe Dotier- und Fremdmetallgehalte
5. prozeß- und reaktionsgerechtes Auflösungsverhalten.

2

Da synthetische Eisenrohstoffe überwiegend in stückiger Form (Blöcke, Stäbe, Knüppel, Masseln, Brammen, etc.) oder sehr feinteilig (Pulver) vorliegen oder aus Qualitätsgründen legiert sind, sind handelsübliche, synthetische Eisenrohstoffe in eisenauflösenden Prozessen zur Erzeugung von Eisenoxidpigmenten bisher nicht eingesetzt worden. Stückige, synthetische Eisenrohstoffe sind nur unter erheblichem Aufwand zu fördern und zu dosieren; darüber hinaus lösen sich stückige, synthetische Eisenrohstoffe in den eisenauflösenden Prozessen zur Pigmentproduktion nur sehr langsam und unvollständig auf. Die Fremdmetallgehalte in diesen Eisenrohstoffen können je nach Einsatzgebiet in den weiterverarbeitenden Industriebereichen stark variieren; je nach Einsatzgebiet können Chrom-, Molybdän-, Vanadium- und/oder Nickel-Gehalte größer 15 Gew.-% vorliegen.

Eisenpulver können leicht gefördert und dosiert werden; je nach Anwendungsgebiet können jedoch in Eisenpulvern hohe Fremdmetallgehalte auftreten. Aufgrund ihres Reaktionsverhaltens lösen sich Eisenpulver im Verlauf von eisenauflösenden Pigmentbildungsprozessen zwar vollständig auf, jedoch werden infolge der zu hohen Reaktivität bei der Verwendung von Pulvern zur Erzeugung von Eisenoxidpigmenten in eisenauflösenden Prozessen keine Eisenoxidteilchen mit Pigmentcharakter gebildet. Die erhaltenen Teilchen haben eine ungeeignete Teilchengröße und -verteilung und sind überwiegend nicht phasenrein.

Legierte, synthetische Eisenrohstoffe haben neben einer mangelhaften Reaktivität in den eisenauflösenden Prozessen den Nachteil, daß die Legierungselemente in die Eisenoxidteilchen eingebaut werden. Der Einbau von Schwermetallen (z.B.: Cr, Mo, V, Ni, Cu etc.) ist mit Einbußen der coloristischen Eigenschaften der erhaltenen Pigmente verbunden sowie ökologisch bedenklich. Es wurden daher in eisenauflösenden Prozessen, wie z.B. dem Penniman-Prozeß, zur Herstellung von Eisenoxidpigmenten bisher keine synthetischen Eisenrohstoffe eingesetzt.

Aufgabe war es daher, Eisenrohstoffe zur Herstellung von Eisenoxidpigmenten in eisenauflösenden Prozessen zur Verfügung zu stellen, die die Nachteile des Standes des Technik (ungünstiges Dosier- und Förderverhalten, unvollständiges Auflöseverhalten, Schwermetallgehalte, geringe Raumzeitausbeuten) nicht aufweisen.

Überraschenderweise wurde gefunden, daß spezielle, synthetische Eisenrohstoffe - nämlich niedriglegierte, sphärische, nahezu isometrische, gegebenenfalls kugel-oder ellipsenförmige, bainitreiche Eisenpartikel, die unter anderem als Strahlmittel Verwendung finden, zur Erzeugung von Eisenoxidpigmenten in eisenauflösenden Prozessen geeignet sind und sowohl gegenüber Sekundärrohstoffen als auch gegenüber bainitarmen, sphärischen Eisenpartikel wie auch gegenüber den übrigen, synthetischen Eisenrohstoffen Vorteile aufweisen.

Gegenstand der Erfindung ist die Verwendung von synthetischen, bainitreichen Eisenrohstoffen mit einem Bainitanteil größer 50 Gew.-% und einer mittleren Teilchengröße zwischen 0,5 und 100 mm zur Herstellung von Eisenoxidpigmenten in eisenauflösenden Prozessen.

Die vorgenannten synthetischen, bainitreichen Eisenpartikel werden üblicherweise durch Verdüsung von Schmelzen hergestellt. Bei der Herstellung der Schmelze ist es vom Kohlenstoffgehalt und von der Art des Verdüsungs- und Abkühlvorganges abhängig, welche Phasen aus dem Eisen-Kohlenstoff-Diagramm (z.B. Ferrit, Perlit, Bainit, Martensit) gebildet werden, welche Teilchenform und welche mittlere Teilchengröße sowie welche Teilchengrößenverteilung erhalten wird.

Bevorzugt weisen die verwendeten synthetischen, bainitreichen Eisenrohstoffe einen Bainitanteil von größer 60 Gew.-% auf.

Die sphärische Teilchenform der synthetischen, bainitreichen Eisenrohstoffe ist bevorzugt.

Die mittlere Teilchengröße liegt besonders bevorzugt zwischen 0,5 und 50 mm oder zwischen 20 und 100 mm.

Der metallische Eisengehalt der synthetischen, bainitreichen Eisenrohstoffe ist vorzugsweise größer 80 Gew.-%, besonders bevorzugt größer 85 Gew.-%.

In einer besonders bevorzugten Ausführung der vorliegenden Erfindung liegt der metallische Eisengehalt der synthetischen Eisenrohstoffe größer 90 Gew.-%, ganz besonders bevorzugt sind synthetische Eisenrohstoffe mit einem metallischen Eisengehalt größer 95 Gew.-%.

Der Fremdmetallgehalt der synthetischen, bainitreichen Eisenrohstoffe liegt vorzugsweise bei kleiner 15 Gew.-%, besonders bevorzugt bei kleiner 10 Gew.-%.

In einer besonders bevorzugten Ausführung der vorliegenden Erfindung ist der Fremdmetallgehalt der synthetischen Eisenrohstoffe kleiner 7 Gew.-%, ganz besonders bevorzugt sind synthetische Eisenrohstoffe mit einem Fremdmetallgehalt kleiner 3 Gew.-%.

Im Regelfall sind die synthetischen Eisenrohstoffe je nach Anwendungsfall mit folgenden Fremdelementen dotiert: Si, C, Mn, Cr, Ni, V, Mo, Cu, W, Ti, P, N, Co. Diese Fremdmetalle können auch Verbindungen mit dem Eisen eingehen (z.B. C als $Fe_3C$-Zementit) und so das Eisen binden.

Der Rest (auf 100 Gew.-%) in den synthetischen Eisenrohstoffen, welcher nicht als metallisches Eisen, eisenhaltige Verbindung oder Fremdmetall vorliegt, kann aus Eisenoxiden unterschiedlicher Zusammensetzung (z.B. FeO, $Fe_2O_3$, $Fe_3O_4$) bestehen.

Die besonders bevorzugten, sphärischen, bainitreichen Eisenpartikel haben also folgende Eigenschaften:

1. mittlere Teilchengröße:    0,5 - 100 mm

2. Teilchengrößenverteilung: 80 Gew.-% der Teilchen liegen zwischen einem Viertel und dem vierfachen des Mittelwertes

3. metallischer Eisengehalt: > 80 Gew.-%

4. Fremdmetallgehalte: < 15 Gew.-%

5. Bainitgehalt: > 50 Gew.-%.

Die sphärischen, bainitreichen Eisenpartikel weisen folgende, günstige Eigenschaften auf:

1. Die sphärischen, bainitreichen Eisenpartikel zeigen ein günstiges Förderverhalten.
2. Sie sind leicht dosierbar.
3. Sie lösen sich in den eisenauflösenden Pigmentbildungsprozessen nahezu vollständig auf.
4. Sie haben niedrige Fremdmetallgehalte.
5. Sie weisen in den Pigmentbildungsprozessen ein günstiges Reaktionsverhalten auf.

Überraschenderweise übertreffen die synthetischen, sphärischen, bainitreichen Eisenpartikel in ihrem Reaktionsverhalten sowohl die bislang eingesetzten Sekundärrohstoffe als auch bainitarme, synthetische Eisenpartikel. Man erhält bei gleichzeitig verbesserten Raumzeitausbeuten im Penniman- und im Lauxprozeß Produkte mit sehr günstigen Pigmenteigenschaften. Auf diesem Weg erhaltene Gelbpigmente (siehe Beispiele) zeigen z.B. gegenüber solchen, die unter Verwendung von Sekundärrohstoffen oder bainitarmen, synthetischen, sphärischen Eisenpartikeln erzeugt wurden, Vorteile in der Purtonlackabtestung im CIELAB-Farbwert b*, der ein Maß für den qualitätsbestimmenden Gelbanteil des Farbtons darstellt.

Die Purtonbestimmung der Farbwerte der erfindungsgemäß hergestellten Pigmente sowie der Pigmente aus den Vergleichsbeispielen wird in L 64 thix. Paste (nicht härtendes Alkydharz der Fa. Bayer AG) bei einer Pigmentvolumenkonzentration von 10% durchgeführt. Die Einarbeitung des Pigmentes in die Paste erfolgt auf einer Tellerfarbenausreibmaschine mit 240 mm Durchmesser bei einer Belastung von 25 kg. Pigment und Paste werden während 100 Umdrehungen der Tellerfarbenausreibmaschine unter mehrmaligem Öffnen des Gerätes und Sammlung des Gemisches dispergiert.

Die farbliche Auswertung der erfindungsgemäß erhaltenen Pigmente erfolgte in Alkydal L 64 thix. (nicht härtendes Alkydharz der Fa. Bayer AG) bei einer Pigmentvolumenkonzentration von 10%. Die Bestimmung der Remissionswerte und CIELAB-Daten (DIN 5033, Teil 7) erfolgt mit einem Meßgerät mit Ulbrichtkugel (Beleuchtungsbedingungen d/8°, Normlichtart C/2°) unter Einschluß der Oberflächenreflektion. Die erhaltenen Remissionswerte werden nach DIN 5033, Teil 3 in das CIELAB-Farbdatensystem umgerechnet. Die Bestimmung der relativen Farbabstände kann nach DIN 6174 bzw. ISO 7724, 1-3 drafts durch Vergleich einer Probe mit einer festgelegten Referenzsubstanz erfolgen.

Da ein Farbumschlag der unter Verwendung der synthetischen, bainitreichen Eisenrohstoffe erhaltenen Pigmente zu ungesättigteren, dunkleren Pigmenten mit negativeren L*- und b*-CIELAB-Farbwerten unerwünscht ist, berechnet man entsprechend DIN 6174 (ISO 7724) die relativen Farbabstände der erfindungsgemäß erhaltenen Pigmentproben gegen einen mit synthetischen, bainitarmen Eisenrohstoffen hergestellten Bezug.

Die Ermittlung der unterschiedlichen Anteile der Werkstoffgefüge der Rohstoffteilchen erfolgt durch eine metallographische Schliffuntersuchung, wie sie in "Eigenschaften und Anwendungen von Stählen" beschrieben ist (Prof. Dr. Dr. W. Dahl, Eigenschaften und Anwendungen von Stählen, Band 2: Stahlkunde, Verlag der Augustinus Buchhandlung, Aachen, 1993, S. 855-864).

Die Rohstoffteilchen werden in glasfaserverstärktem Kunststoff eingefaßt und mit Naßschleifpapier (SiC, Körnung 600 μm) plangeschliffen. Anschließend werden die Proben mit Diamantemulsion (Körnung 1 μm) poliert und zur Kontrastierung chemisch geätzt ("Nitalätzung": s. Eigenschaften und Anwendungen von Stählen, ibid., S. 864). Die Häufigkeit der unterschiedlichen Gefügeausbildungen wird durch visuelles Auszählen der Teilchen am Lichtmikroskop ermittelt.

Die Bestimmung des metallischen Eisengehaltes der verwendeten Eisenrohstoffe erfolgt mit Hilfe der Wasserstoffmethode:

1. Apparatur

Gasentwicklungsapparatur: 250 ml Rundkolben, 50 ml Meßtropftrichter mit Gasableitung und Gaskappe zur Stickstoffzuleitung, 1000 ml Gassammelgefäß (Meßtropftrichter) mit Graduierung und Hahn, Vakuumanschluß, pneumatische Wanne (3 l) mit Thermometer, 500 ml Meßzylinder, Heizpilz für 250 ml Rundkolben.

2. Arbeitsvorschrift

In eine pneumatische Wanne wird Wasser eingefüllt. In einem 250 ml Rundkolben werden ca. 2 g der zu bestimmenden Probe des Eisenrohstoffes eingewogen. Nach Zugabe von 250 ml destilliertem Wasser wird der Rundkolben in den Heizpilz gesetzt, und es wird ein Meßtropftrichter mit Gasableitung aufgesetzt. Der Inhalt der Rundkolbens wird bis zum Sieden erhitzt und auf Temperatur gehalten. Sobald keine Gasblasen mehr an der Spitze der Gasableitung austreten, werden 40 ml verdünnte Salzsäure (ca. 10%ig) in den Tropftrichter gefüllt, der Tropftrichter mit einer Gaskappe verschlossen und die Gasableitung von unten in das Gassammelgefäß eingeführt. Das Ende des Stickstoffschlauchs wird in einen 500 ml Meßzylinder, der zu ca. 2/3 mit Wasser gefüllt ist, gesteckt, damit ein Gegendruck erzeugt wird. Das Gassammelgefäß wird durch Anlegen eines Vakuums vollständig mit Wasser gefüllt. Die Salzsäure wird tropfenweise in den Rundkolben gegeben. Die Lösung im Rundkolben wird solange bei schwachem Sieden erhitzt, bis die Wasserstoffentwicklung beendet ist.

3. Meßwerte

Volumen des im Gassammelgefäß verdrängten Wassers (V)
Abstand des Wasserstands im Gassammelgefäß und in der Wanne (h)
Wassertemperatur ($T_w$)
Raumtemperatur (T)
Luftdruck ($P_{Luft}$)

4. Berechnung

Druck (P) = $P_{Luft}$ - $P_{hydrostat.}$ - $P_{H20}$
$P_{Luft}$ = Luftdruck; $P_{hydrostat.}$ = **h x 0**,0736 (hydrostatischer Druck),
$P_{H20}$ = Wasserdampfdruck

normalisiertes Volumen (V°) :     **P x V** x 273/R x T x 760
Gehalt ($Fe_{met.}$):     2,000 g Einwaage entsprechen 803,3 ml Wasserstoff (bei 100 % metallischem Eisen)

metallischer Eisengehalt in der Probe des Eisenrohstoffes:

$$Fe_{met.} = V° \text{ x } 100/803,3 \text{ x (Einwaage/2)}$$

Die Erfindung soll anhand der nachfolgenden Beispiele näher erläutert werden: Nachfolgend werden Beispiele zur Erzeugung von Eisenoxidgelbpigmenten beschrieben, die unter den für den Fachmann bekannten Bedingungen (pH < 4,5) in eisenauflösenden Prozessen (Penniman- oder Lauxverfahren) erzeugt werden. Die Phasenbildung der Eisenoxidpigmente in eisenauflösenden Prozessen ist pH-gesteuert, im sauren pH-Bereich (< 4,5) wird $\alpha$-FeOOH gebildet, im schwach sauren pH-Bereich (ca. 4,5 - 5,5) werden $\gamma$-FeOOH und $\alpha$-$Fe_2O_3$ erzeugt, im pH-Bereich > 5 ist die Bildung von $Fe_3O_4$ bevorzugt, wobei dem Fachmann überlassen ist, unter welchen exakten Bedingungen bei Verwendung von sphärischen, bainitreichen Eisenpartikeln $\gamma$-FeOOH, $\alpha$-$Fe_2O_3$ oder $Fe_3O_4$ hergestellt werden.

**Pennimanverfahren:**

1. Beschreibung der Apparatur:
9,2 l -Edelstahltopf mit einem knapp über dem Boden angeordneten Begasungsring, einem Blattrührer, einem Steuerungsthermoelement, einer pH-Elektrode, einem Glasdeckel und einem Rückflußfühler.
2. Beschreibung der Keimherstellung
Eine wäßrige Lösung von Eisen(II)sulfat mit 150 g/l Fe $SO_4$ wird mit soviel 25%iger Natronlauge unter Rühren versetzt, daß 40% des Eisens als Eisen-(II)-hydroxid gefällt werden können. Durch Begasung mit Luft bei 35°C wird Fe(II) zu Fe(III) oxidiert; dabei fällt der pH-Wert von 7 auf 3.
3. Beschreibung der Pigmentaufbaureaktion
Eingesetzter Keim; $\alpha$-FeOOH mit einer spezifischen Oberfläche von 59 $m^2$/g
Es werden 9 l Keimsuspension mit einem Gehalt von 7,0 g/l $\alpha$-FeOOH und einem $FeSO_4$-Gehalt von 40 g/l sowie 650 g metallischer Eisenrohstoff vorgelegt. Die Suspension wird unter Rühren bei 200 Upm auf 85°C aufgeheizt und dann unter weiterem Rühren mit 200 l/h Luft begast. Nach bestimmten Oxidationszeiten werden Proben von im Mittel 250 ml Volumen gezogen. Nach 82 h wird die Reaktion abgestellt.
Von den Proben wird der $\alpha$-FeOOH-Gehalt bestimmt. Aus dem $\alpha$-FeOOH-Gehalt nach bestimmten Oxidationszeiten und dem eingesetzten $\alpha$-FeOOH-Keimgehalt wird der Vervielfältigungsfaktor VVF gemäß folgender Formel berechnet:

VVF = Gehalt $\alpha$-FeOOH (Probe) / Gehalt $\alpha$-FeOOH (Keim).

In der nachfolgenden Tabelle sind die in den Beispielen eingesetzten, metallischen, sphärischen Eisenrohstoffe charakterisiert.

Tabelle 1

| Charakterisierung der metallischen, sphärischen Eisenrohstoffe | | | | | |
|---|---|---|---|---|---|
| | **Form** | **Teilchengröße** | **metallisches Eisen** | **Bainitgehalt** | **Fremdmetallgehalt** |
| Vergleichs beispiel 1 | kugel- und ellipsenförmig | 0,25 - 4 mm | 93% | 35% | < 15% |
| Beispiel 1 | kugel- und ellipsenförmig | 0,25 - 4 mm | 95% | 62% | < 15% |

Die Laufzeiten bei Probennahme und die gemessenen CIELAB-Farbwerte $\Delta a^*$ und $\Delta b^*$ sind in der nachfolgenden Tabelle für die Beispiele aufgeführt. Als Bezug wurde das im Vergleich zu den erfindungsgemäß hergestellten Pigmenten gleichartig aufgebaute Pigment (Laufzeit 122 h), welches unter Verwendung von bainitarmen Eisenpartikeln erhalten wurde, festgelegt. Die Proben werden nach den üblichen Methoden filtriert, salzfrei gewaschen und bei 90°C 15 Stunden in einem Trockenschrank getrocknet; anschließend werden die CIELAB-Farbwerte entsprechend der oben angegebenen Methode bestimmt.

Tabelle 2

| Laufzeiten und CIELAB-Farbwerte $\Delta a^*$- und $\Delta b^*$ der Pigmente bei Verwendung von sphärischen Eisenpartikeln (Pennimanverfahren) | | | | | |
|---|---|---|---|---|---|
| **Vergleichsbeispiel 1** | | | **Beispiel 1** | | |
| Laufzeit / [h] | $\Delta a^*$ | $\Delta b^*$ | Laufzeit / [h] | $\Delta a^*$ | $\Delta b^*$ |
| 13 | - 4,6 | - 1,0 | | | |
| 16 | - 3,9 | 0,2 | | | |
| | | | 24 | - 1,6 | 5,2 |
| 30 | - 2,3 | 1,8 | | | |
| | | | 33 | - 1,1 | 4,9 |
| 37 | - 1,9 | 1,6 | | | |
| | | | 39 | - 0,9 | 4,6 |
| | | | 45 | - 0,6 | 4,4 |
| | | | 52 | - 0,4 | 4,0 |
| | | | 59 | - 0,3 | 3,7 |
| | | | 67 | - 0,2 | 3,5 |
| 70 | - 0,8 | 0,7 | | | |
| | | | 71 | - 0,1 | 3,5 |
| | | | 73 | - 0,2 | 3,5 |
| 97 | - 0,3 | - 0,1 | | | |
| 122 | 0,0 | 0,0[x] | | | |
| (x = Bezug) | | | | | |

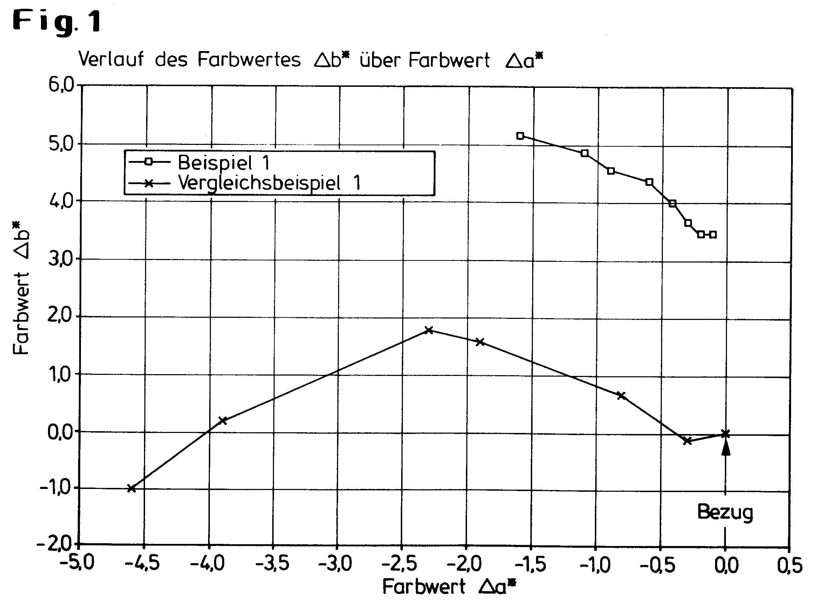

Die Abbildung 1 zeigt, daß die synthetischen, metallischen, bainitreichen Eisenrohstoffe gegenüber synthetischen, bainitarmen Eisenpartikeln Vorteile in den qualitätsrelevanten

$$\text{CIELAB-Farbwerten b* und C* } (= \sqrt{a^{*2}+b^{*2}})$$

wie auch in der Raumzeitausbeute aufweisen.

**Lauxverfahren:**

Anhand der nachfolgenden Beispiele soll die Verwendung der neuen, synthetischen, bainitreichen Eisenrohstoffe zur Erzeugung von Eisenoxidgelbpigmenten nach dem Lauxverfahren beispielhaft beschrieben werden, wobei der Fachmann die Wahl der technischen Aggregate oder der zusätzlichen Einsatzstoffe je nach Bedarf variieren kann. Eisenoxidpigmente, die durch Reaktion von metallischen Eisenrohstoffen mit Nitrobenzol erhalten werden, werden gemäß dem Lauxverfahren hergestellt, das in den Patenten DE 463 773, DE 464 561 und DE 515 758 beschrieben ist. Durch Variation der zusätzlichen Einsatzstoffe kann der Fachmann wie allgemein bekannt die im Lauxverfahren erhältlichen Eisenoxidphasen ($\alpha$-FeOOH, $\gamma$-Fe$_2$O$_3$, $\alpha$-Fe$_2$O$_3$, oder Fe$_3$O$_4$) gezielt herstellen. Ausgehend von dem in den Patenten beschriebenen Verfahren werden in druckfesten, mit Rührern ausgestatteten Kesseln die in Tabellen 3 angegebenen Stoffe umgesetzt.

Tabelle 3

| Stoffe und Verfahrensparameter (Lauxverfahren, Kesselgröße: 2 Liter) | | | |
|---|---|---|---|
| **Parameter** | **Roh- und Einsatzstoffe** | **Vergleichsbeispiel 2** | **Beispiel 2** |
| 1. Phase | FeCl$_2$-Lösung / [l] | 0,124 | 0,124 |
| | H$_2$O / [l] | 0,046 | 0,046 |
| | AlCl$_3$(160 g/l) / [l] | 0,055 | 0,055 |
| | metallischer Eisenrohstoff / [kg] | 0,08 | 0,08 |
| | Nitrobenzol / [l] | 0,095 | 0,095 |
| | | | |
| 2. Phase | metallischer Eisenrohstoff / [kg] | 0,568 | 0,568 |
| | Nitrobenzol / [l] | 0,408 | 0,408 |
| | H$_2$O / [l] | 0,6 | 0,6 |
| | Laufzeiten bis 100% Umsatz /[h] | 8,75 | 6,25 |

In der nachfolgenden Tabelle sind die in den Beispielen eingesetzten, metallischen Eisenrohstoffe charakterisiert.

Tabelle 4

| Charakterisierung der eingesetzten, metallischen Eisenrohstoffe | | | | | |
|---|---|---|---|---|---|
| | **Form** | **Teilchengröße** | **metallisches Eisen** | **Bainitgehalt** | **Fremdmetallgehalt** |
| Vergleichs beispiel 2 | kugel- und ellipsenförmig | 0,25 - 4 mm | 93% | 35% | < 15% |
| Beispiel 2 | kugel- und ellipsenförmig | 0,25 - 4 mm | 95% | 62% | < 15% |

**Probenaufbereitung:**

In einem 300 ml Becher werden ca. 200-250 g Pigmentpaste mit 50 ml frisch destilliertem Anilin versetzt, mit einem Pastenlöffel gerührt und anschließend das Anilin abdekantiert. Der Vorgang wird so oft wiederholt, bis das Anilin nach dem Verrühren klar und farblos ist. Anschließend wird die gewaschene Paste in eine 2 Liter Weithalsflasche gegeben und mit Trinkwasser unter kräftigem Schütteln aufgeschlämmt. Zur Abtrennung von überschüssigem Eisen und Grobanteil wird die Suspension über ein 40 $\mu$m Sieb gegeben. Die erhaltene Suspension wird über einen Büchnertrichter, der mit Filterpaper ausgelegt wird, im Vakuum abfiltiert. Sobald die Flüssigkeit abgesaugt ist, wird die Paste auf dem Filter ca. 3-4 mal mit jeweils 250 ml Trinkwasser übergossen, um lösliche Salze auszuwaschen.

Die stichfeste Pigmentpaste wird 1 Stunde bei 170°C im Trockenschrank getrocknet. Das getrocknete Pigment wird durch ein 2 mm Sieb gestrichen und anschließend in das Bindemittelsystem (L 64 thix. -s.o.-) eingearbeitet.

Als Bezug wurde das Pigment, welches unter Verwendung von synthetischen, metallischen, bainitarmen Eisenpartikeln erhalten wurde, festgelegt.

Tabelle 5

| Laufzeiten bis 100% Nitrobenzolumsatz und CIELAB-Farbwerte $\Delta$L* und $\Delta$b* | | | | |
|---|---|---|---|---|
| | Laufzeiten bis 100% Nitrobenzolumsatz [min] | Pigmentauswaage [g] | Raumzeitausbeute [g/l.h] | CIELAB- Farbwerte | |
| | | | | $\Delta$L* | $\Delta$b* |
| Vergleichsbeispiele 2 | 525 | 845 | 48,3 | 0,0$^x$ | 0,0$^x$ |
| | | | | (x=Bezug) | |
| Beispiel 2 | 375 | 845 | 67,6 | 9,7 | 12,2 |

Die Ergebnisse, die in Tabelle 5 aufgeführt sind, zeigen, daß die Verwendung der synthetischen, bainitreichen Eisenrohstoffe im Vergleich zu bainitarmen Eisenpartikeln auch im Lauxverfahren mit Vorteilen in der Raumzeitausbeute wie auch in den qualitätsbestimmenden CIELAB-Farbwerten L* und b* verbunden ist.

## Patentansprüche

1.    Verwendungen von synthetischen, bainitreichen Eisenrohstoffen mit einem Bainitanteil von größer 50 Gew.-% und einer mittleren Teilchengröße zwischen 0,5 und 100 mm zur Herstellung von Eisenoxidpigmenten in eisenauflösenden Prozessen.

2.    Verwendung von synthetischen, bainitreichen Eisenrohstoffen zur Herstellung von Eisenoxidpigmenten in eisenauflösenden Prozessen gemäß Anspruch 1, dadurch gekennzeichnet, daß die Eisenrohstoffe einen Bainitanteil von größer 60 Gew.-% aufweisen.

3.    Verwendung von synthetischen, bainitreichen Eisenrohstoffen gemäß Anspruch 1 oder 2, dadurch gekennzeichnet, daß die Eisenrohstoffe sphärische Teilchenform aufweisen.

4.    Verwendung von synthetischen, bainitreichen Eisenrohstoffe gemäß einem oder mehreren der Ansprüche 1 bis 3, dadurch gekennzeichnet, daß die mittelere Teilchengröße zwischen 0,5 mm und 50 mm liegt.

5.    Verwendung von synthetischen, bainitreichen Eisenrohstoffe gemäß einem oder mehreren der Ansprüche 1 bis 3, dadurch gekennzeichnet, daß die mittlere Teilchengröße zwischen 20 und 100 mm liegt.

6.    Verwendung von synthetischen, bainitreichen Eisenrohstoffen gemäß einem oder mehreren der Ansprüche 1 bis 5, dadurch gekennzeichnet, daß der metallische Eisengehalt größer 80 Gew.-% ist.

7.    Verwendung von synthetischen, bainitreichen Eisenrohstoffen gemäß einem oder mehreren der Ansprüche 1 bis 6, dadurch gekennzeichnet, daß der metallische Eisengehalt größer 90 Gew.-% ist.

8.    Verwendung von synthetischen, bainitreichen Eisenrohstoffen gemäß einem oder mehreren der Ansprüche 1 bis 7, dadurch gekennzeichnet, daß der metallische Eisengehalt größer 95 Gew.-% ist.

9.    Verwendung von synthetischen, bainitreichen Eisenrohstoffen gemäß einem oder mehreren der Ansprüche 1 bis 8, dadurch gekennzeichnet, daß der Fremdmetallgehalt kleiner 15 Gew.-% ist.

10. Verwendung von synthetischen, bainitreichen Eisenrohstoffen gemaß einem oder mehreren der Ansprüche 1 bis 9, dadurch gekennzeichnet, daß der Fremdmetallgehalt kleiner 7 Gew.-% ist.

**Claims**

1. Uses of synthetic, bainite-rich iron raw materials having a bainite fraction of greater than 50 wt.% and an average particle size of between 0.5 and 100 mm for the production of iron oxide pigments in iron-dissolving processes.

2. Use of synthetic, bainite-rich iron raw materials for the production of iron oxide pigments in iron-dissolving processes according to claim 1, characterised in that the iron raw materials have a bainite fraction of greater than 60 wt.%.

3. Use of synthetic, bainite-rich iron raw materials according to claim 1 or 2, characterised in that the iron raw materials have a spherical particle shape.

4. Use of synthetic, bainite-rich iron raw materials according to one or more of claims 1 to 3, characterised in that the average particle size is between 0.5 mm and 50 mm.

5. Use of synthetic, bainite-rich iron raw materials according to one or more of claims 1 to 3, characterised in that the average particle size is between 20 mm and 100 mm.

6. Use of synthetic, bainite-rich iron raw materials according to one or more of claims 1 to 5, characterised in that the metallic iron content is greater than 80 wt.%.

7. Use of synthetic, bainite-rich iron raw materials according to one or more of claims 1 to 6, characterised in that the metallic iron content is greater than 90 wt.%.

8. Use of synthetic, bainite-rich iron raw materials according to one or more of claims 1 to 7, characterised in that the metallic iron content is greater than 95 wt.%.

9. Use of synthetic, bainite-rich iron raw materials according to one or more of claims 1 to 8, characterised in that the foreign metal content is less than 15 wt.%.

10. Use of synthetic, bainite-rich iron raw materials according to one or more of claims 1 to 9, characterised in that the foreign metal content is less than 7 wt.%.

**Revendications**

1. Utilisations de matières premières synthétiques contenant du fer riches en bainite dont la fraction de bainite est supérieure à 50% en poids et dont la granulométrie moyenne s'élève entre 0,5 et 100 mm pour la production de pigments d'oxydes de fer dans des procédés de dissolution du fer.

2. Utilisation de matières premières synthétiques contenant du fer riches en bainite pour la production de pigments d'oxydes de fer dans des procédés de dissolution du fer selon la revendication 1, caractérisée en ce que les matières premières contenant du fer présentent une fraction de bainite supérieure à 60% en poids.

3. Utilisation de matières premières synthétiques contenant du fer riches en bainite selon la revendication 1 ou 2, caractérisée en ce que les matières premières contenant du fer présentent des particules de forme sphérique.

4. Utilisation de matières premières synthétiques contenant du fer riches en bainite selon une ou plusieurs des revendications 1 à 3, caractérisée en ce que la granulométrie moyenne se situe entre 0,5 mm et 50 mm.

5. Utilisation de matières premières synthétiques contenant du fer riches en bainite selon une ou plusieurs des revendications 1 à 3, caractérisée en ce que la granulométrie moyenne se situe entre 20 mm et 100 mm.

6. Utilisation de matières premières synthétiques contenant du fer riches en bainite selon une ou plusieurs des revendications 1 à 5, caractérisée en ce que la teneur en fer métallique est supérieure à 80% en poids.

7. Utilisation de matières premières synthétiques contenant du fer riches en bainite selon une ou plusieurs des revendications 1 à 6, caractérisée en ce que la teneur en fer métallique est supérieure à 90% en poids.

8. Utilisation de matières premières synthétiques contenant du fer riches en bainite selon une ou plusieurs des revendications 1 à 7, caractérisée en ce que la teneur en fer métallique est supérieure à 95% en poids.

9. Utilisation de matières premières synthétiques contenant du fer riches en bainite selon une ou plusieurs des revendications 1 à 8, caractérisée en ce que la teneur en métaux étrangers est inférieure à 15% en poids.

10. Utilisation de matières premières synthétiques contenant du fer riches en bainite selon une ou plusieurs des revendications 1 à 9, caractérisée en ce que la teneur en métaux étrangers est inférieure à 7% en poids.

# Fig. 1

Verlauf des Farbwertes $\Delta b^*$ über Farbwert $\Delta a^*$

EP 0 792 840 B1